Europäisches Patentamt

(19) European Patent Office

Office européen des brevets

(11) Numéro de publication: **0 117 216**
**A1**

(12) ## DEMANDE DE BREVET EUROPEEN

(21) Numéro de dépôt: **84450004.1**

(22) Date de dépôt: **16.02.84**

(51) Int. Cl.³: **F 16 K 17/30**

(30) Priorité: **18.02.83 FR 8302808**

(43) Date de publication de la demande:
**29.08.84 Bulletin 84/35**

(84) Etats contractants désignés:
**AT BE CH DE FR GB IT LI LU NL SE**

(71) Demandeur: **Guillemot, Gerard**
**Route de l'Aerodrome Quartier Mora**
**F-40140 Soustons(FR)**

(72) Inventeur: **Guillemot, Gerard**
**Route de l'Aerodrome Quartier Mora**
**F-40140 Soustons(FR)**

(54) **Valve de sécurité, arrêt de charge pour circuits hydrauliques à action directe.**

(57) L'invention concerne un dispositif, destiné à arrêter une charge, pendant sa montée ou sa descente, par vérin hydraulique, en cas de rupture de la canalisation d'alimentation.

Cette valve hydraulique est constituée d'un corps (1) avec 2 orifices (P et A). D'un clapet d'obturation (2) muni de 4 ajutages (Aj); le clapet est maintenu ouvert par le ressort (3). Il est également guidé par le siège (4) et le corps (1). Une soupape (5) tarée par le ressort (6) et les rondelles (7) protège la chambre (A) contre les surpressions après fermeture du clapet (2), consécutive à une rupture de conduite. La vis de réglage permet d'ajuster la section de contrôle défini par l'intersection des 4 ajutages (Aj) et de l'alésage du siège (4). La motricité de la charge augmente le débit dans le sens (A) vers (P) au travers des ajutages (Aj) après rupture de conduite. l'augmentation de pression qui en résulte dépasse la force du ressort (3) et ferme le clapet (2) sur le siège (4), la masse est arrêtée.

Ce dispositif est destiné au levage ou à la descente de charges avec des vérins, sur presses hydrauliques, afin d'assurer la sécurité du personnel d'exploitation contre les dangers d'une chute intempestive.

Fig. 2

EP 0 117 216 A1

La présente invention concerne une valve d'arrêt d'urgence pour circuit hydrauliques

Les valves d'arrêt, dont le principe est bien connu, sont utilisées sur les récepteurs hydrauliques (vérins) supportant de lourdes charges.

Ces valves dont destinées à éviter une chute brutale pouvant être dangereuse à l'égard de l'exploitation, en cas de rupture de tuyauterie d'alimentation.

La présente valve d'arrêt est destinée à être montée en série, au pied du vérin sur la canalisation alimentant la chambre servant au levage et à la retenue de la charge en descente.

Cette valve d'arrêt, ne demande pas de pilotage extérieur pour s'ouvrir, et de ce fait permet son utilisation sur vérin simple ou double effet.

Elle ne nécessite pas de clapet de non retour intérieur pour le passage du fluide pendant le levage.

La présente valve à également pour but d'être installée sur tous les types de circuits hydrauliques, en série, en parallèle, avec ou sans approche rapide.

Le flasquage direct sur vérin permet d'éviter une canalisation, entre l'appareil et le récepteur, pouvant être une source de rupture donc de chute.

Cette valve est destinée à être installée en manutention hydraulique sur les presses hydrauliques (retenue du coulisseau et de l'outillage, cette liste n'étant pas limitative)

Une valve de feinage suivant l'invention est constituée par :

Un siège (4) logé dans le corps (1) de la valve, entre la chambre (A) destinée à être reliée au récepteur hydraulique et une chambre (P) d'arrivée d'huile sous pression.

Un clapet (2) capable d'obturer le siège (4) en se déplacant dans le sens d'écoulement chambre (A) vers chambre (P)

Le clapet (2) est maintenu ouvert par un ressort (3) comprimé en permance.

Une soupape de sureté (5) coaxiale est logée à l'intérieur du clapet (2) . Cette soupape est tarée au moyen du ressort (6) et des rondelles de cablage (7) .Le logement est fermé par un bouchon et son joint

Une vis de réglage (8) et son contre écrou de blocage permet de faire varier la section de passage du fluide Un chapeau de fermeture, bouchon et joint

Les dessins joints sont donnés à titre d'exemples afin de mieux comprendre le fonctionnement et l'utilisation de l'invention.

Figure 1 : représente le schéma de montage d'une valve d'arrêt de charge sur un vérin hydraulique double effet.

Figure 2 : est une vue représentant la valve en position ouvert, soupape fermée, fonctionnement normal.

Figure 3 : est une valve représentant la valve en position fermée après rupture de conduite.

Figure 4 : représente le schéma appliqué à la manœuvre d'une charge avec 2 vérins hydrauliques.

le fonctionnement est le suivant

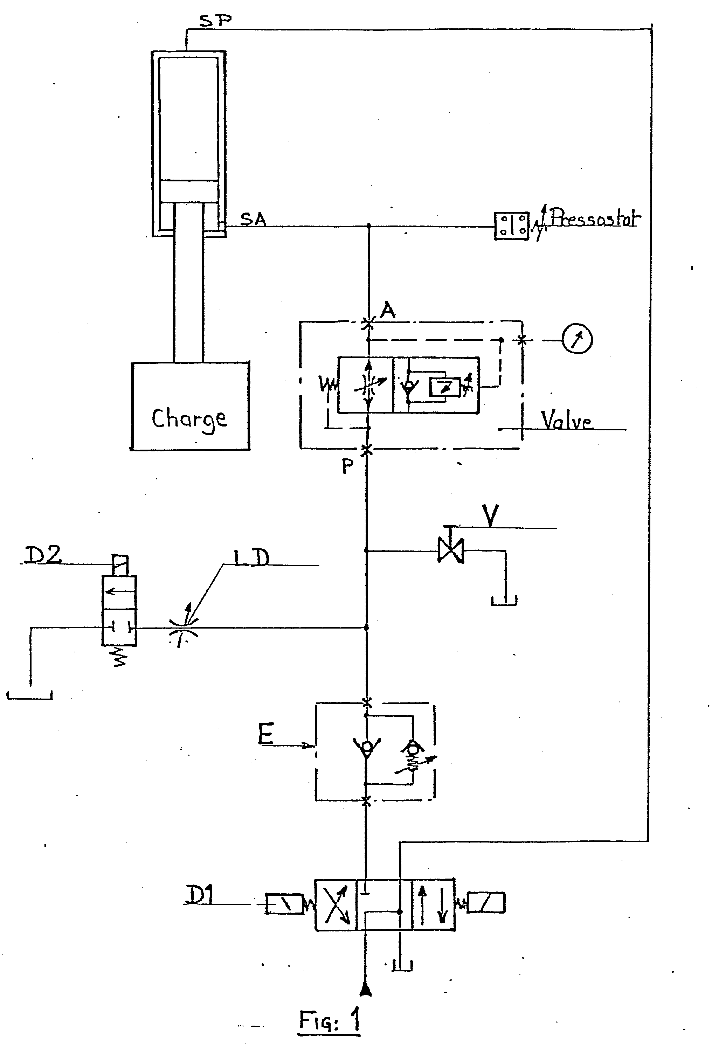

Figure 1 : pour lever la charge, il faut rentrer la tige du vérin, donc envoyer l'huile sous pression dans la chambre (SA).

Pour descendre, l'huile en pression sous la prépondérance de la charge doit ressortir de la chambre (SA) et permettre ainsi la sortie de la tige du vérin.

Deux cas peuvent se présenter.

A) en permettant à l'huile de ressortir directement par le distributeur (D2) et le limiteur de débit (LD) afin de fonctionner en approche rapide (la pression dans ce cas n'est pas nécessaire dans la chambre (SP) du vérin)

B) en envoyant l'huile sous pression dans la chambre (SP) du vérin, au moyen du distributeur d'inversion de fonction (D1), la charge est retenue dans son mouvement de descente par l'équilibreur (E)

Sur les presses hydrauliques, les 2 cas ci-dessus sont presque toujours utilisés, ou un mouvement d'approche rapide à lieur avant le ralentissement avance-travail

Pour répondre et assurer ces deux fonctions, il faut un appareil qui soit normalement ouvert et qui ne nécessite pas de pilotage extérieur, (généralement issue de la canalisation d'alimentation vers la chambre (SP) du vérin)

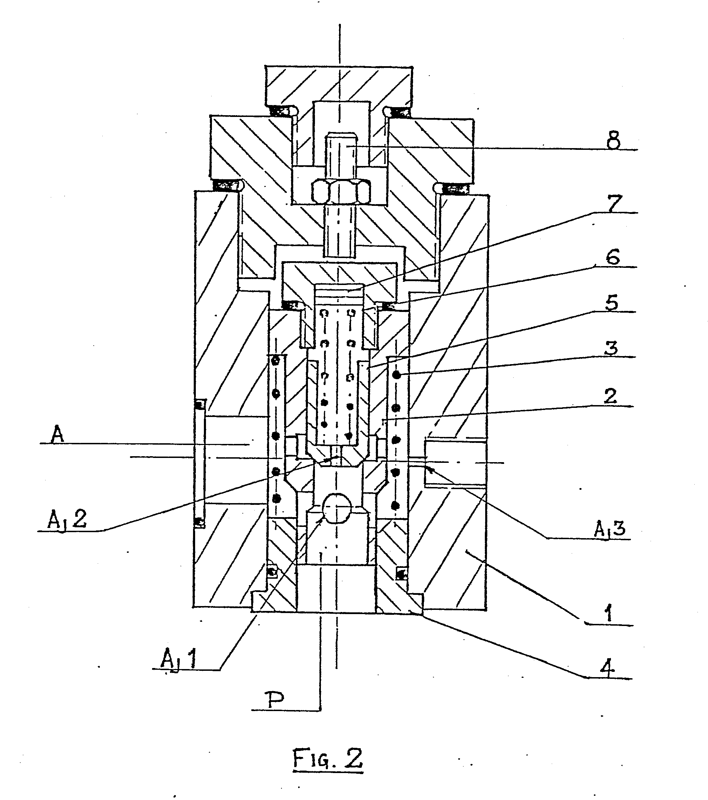

Figure 2 : pendant le levage de la charge, l'huile sous pression arrive en (P) traverse le siège (4) entre à l'intérieur du clapet (2) ressort par les ajutages (Aj1), pénétre dans la chambre (A) et arrive dans la section (SA) du vérin : la tige rentre

3 0117216

La soupape de sureté (5) est maintenue sur le siège interne du clapet (2) par son ressort (6) . L'huile arrivant en pression en (P) traverse l'ajutage (Aj2) de la soupape (5) pénétre derrière elle et confirme la fonction d'appui du ressort.

la section de contrôle de débit d'huile est définie par l'intersection des 4 ajutages (Aj1) du clapet (2) avec l'alésage du siège (4) . Cette section est variable en vissant la vis de réglage (8) de manière à obtenir la meilleure précision possible d'arrêt en cas de rupture.

Etant constituée par des trous, la section de contrôle est peu sensible au colmatage pouvant provenir des impuretées en suspension dans le fluide du circuit.

Pour la descente, le parcours de l'huile se fait en sens inverse du descrptif ci-dessus.

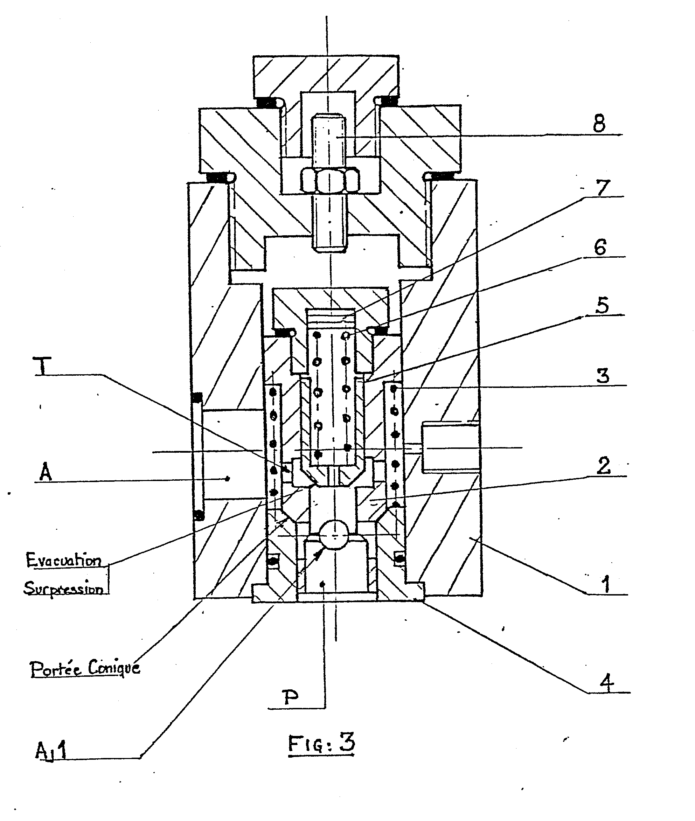

Figure 3 : une rupture à eu lieu en montée sur la conduite d'alimentation entre la valve d'arrêt et l'équilibreur (E) (se reporter au schéma figure 1) .le vérin entrainé par la charge redescend immédiatement sans contrôle de vitesse.

le débit refoulé par la chambre (SA) du vérin augmente instantanément dans le sens (A) vers (P) et n'est plus compatible avec le réglage de la section de contrôle de la valve. La pression s'accroit donc dans la chambre (A) consécutivement à cette augmentation de débit dans la ajutages (Aj1) de retour, agit sur le clapet (2) et comprme le sessort (3) . Quand l'effort sur le clapet (2) devient supérieur à la force du ressort (3), le clapet se déplace des le sens (A) vers (P) réduisant de plus en plus la section d'échapement d'huile favorisant encore l'élévation de pression dans la chambre (A), donc la fermeture. Le clapet (2) vient obturer le retour avec sa portée tronconique sur le siège (4), la charge est arrêtée.

Si la rupture à lieur sur la même canalisation mais en phase descente, le fonctionnement est identique, toutefois dans cette configuration l'huile sous pression continue d'alimenter la chambre (SP) du vérin et peut élever considérablement le niveau de pression dans la chambre (SA) du vérin et de la valve qui s'est fermée. Dans ce cas, la pression multipliée est admise par les trous (T) à la périphérie du clapet (2) et ajit sur la section différentielle de la soupape (5) lorsque l'effort équilibre le tarage du ressort (6) la soupape recule, permettant l'évacuation de l'huile en surpression par l'intérieur du clapet (2) et la rupture de tuyauterie à l'air libre.

Cette soupape doit être considérée comme une sureté simple et non comme un régulateur de pression à action directe permettant de jouer le rôle de l'équilibreur (E) (cela est possible mais avec un fonctionnement saccadé, rudimentaire)

La détection de surpression peut également se faire électriquement par l'adjonction d'un pressostat (P) qui sera réglé à valeur moyenne entre tarage de la valve et effort maxi de relevage de la charge. Il pourra agir comme l'arrêt d'urgence, coupant l'alimentation électrique de la machine.

Après fermeture de la valve, pour l'ouvrir il faut obligatoirement faire une manoeuvre de monte donc de réparer la canalisation détériorée.

Il est également prévu sur le schéma de la figure 1 une vanne de test (V) permettant de contrôler le fonctionnement du système en simulant une rupture.

Pour réarmer la valve, là encore il faut fermer la vanne de test (V) et refaire une montée de la charge.

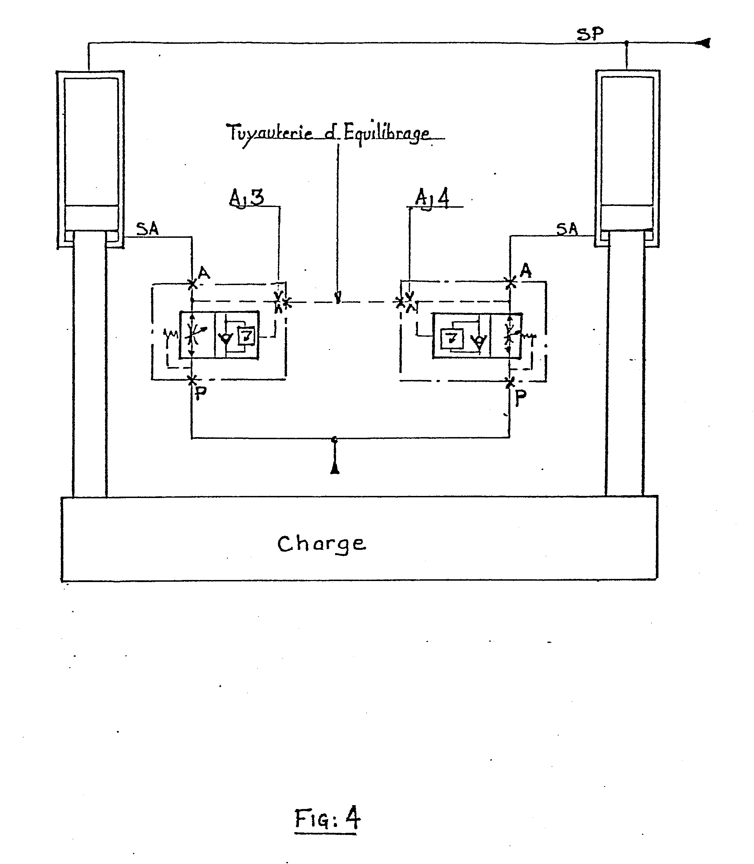

Figure 4 : ce schéma représente l'application au levage d'une charge avec 2 vérins hydrauliques.

On notera sur ce schéma la mise en place d'une tuyauterie d'équilibrage de petit diamètre entre les 2 valves d'arrêt.

Cette tuyauterie est destinée à favoriser la fermeture de l'appareil le plus lent, car la synchronisation hydraulique parfaite ne peut-être obtenue (section, jeux, ressorts rigoureusement identiques)

Lors de la fermeture de la première valve, la seconde va recevoir un complément de débit au travers des ajutages (Aj3 et Aj4) qui sont inclus au corps (1) et ainsi aider la fermeture de l'appareil le plus lent.

Si la charge, dans ce type de montage peut-être arrêtée, par un seul vérin, cette tuyauterie n'est pas nécessaire, la sécurité étant doublée par le montage des 2 valves d'arrêt.

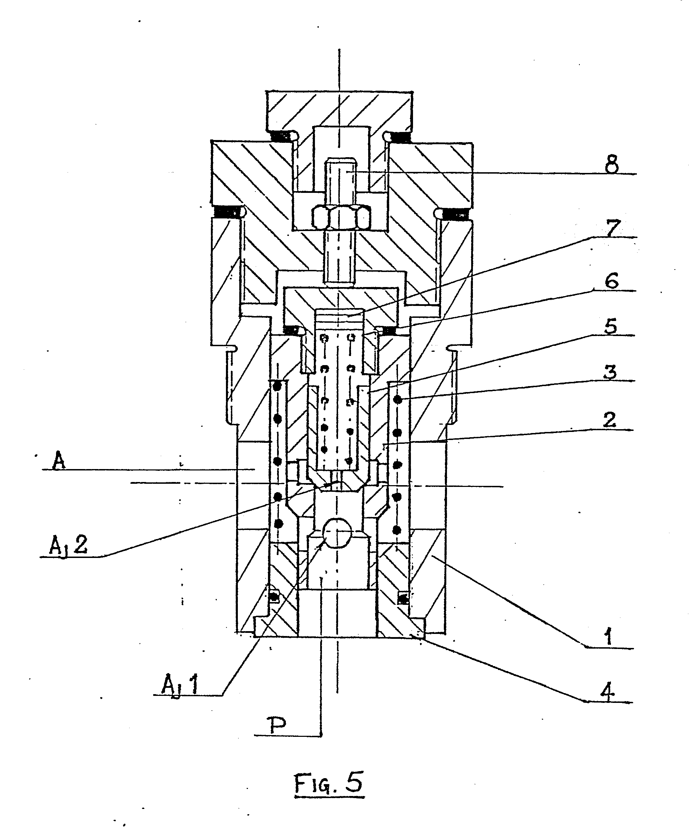

Afin d'être adapté à toutes les applications, en complément des presses hydrauliques, tels que : engins de travaux publics, barrages etc...la figure 5/5 représente un modèle de conception type cartouche, permettant son incorporation directe dans le fond des vérins, en complément de la version flasquée, par bloc foré, évitant ainsi les détériorations accidentelles par la chute d'objets extérieurs. De plus, ce matériel sera adapté au débit par des sections variables.

## REVENDICATIONS

1) Valve d'arrêt de charge comprenant :

- un siège logé dans le corps de valve, entre une chambre d'entrée d'huile venant d'un distributeur et une chambre de sortie communiquant avec le récepteur hydraulique.

- un clapet capable d'obturer le siège en se déplaçant dans le sens chambre de sortie vers chambre d'entrée.

- une soupape de sécurité par un ressort et des rondelles, logée à l'intérieur et dans l'axe du clapet obturateur.

- une vis de réglage permettant d'ajuster la section de passage du fluide.

- un ressort maintenant le clapet obturateur ouvert permettant la libre circulation du fluide dans les 2 sens.

2) Valve d'arrêt suivant la revendication (1) caractérisée par le corps de valve qui est réalisé pour se boulonner directement sur le vérin, sans canalisation intermédiaire.

3) Valve d'arrêt suivant l'une des quelconques revendications précédentes caractérisées en ce que le clapet obturateur est guidé par le siège et le corps par coulissement.

4) Valve d'arrêt suivant l'une des quelconques revendications précédentes caractérisées en ce que le corps est percé d'un ajutage permettant le branchement d'une tuyauterie d'équilibrage pour améliorer le synchronisme de fermeture entre deux valves.

5) Valve d'arrêt suivant l'une des revendications ———————— 1,3 ou 4, version cartouche permettant le montage direct par l'incorporation de cette valve, dans le fond des vérins simple effet ou double effet.

0117216

SP

Charge

SA

Pressostat

A

Valve

P

V

D2

LD

E

D1

**Fig: 1**

FIG. 2

0117216

FIG: 3

SP

Tuyauterie d'Equilibrage

Aj3          Aj4

SA          A          A          SA

P          P

Charge

FIG: 4

PLANCHE 5/5

0117216

FIG. 5

**0117216**

Numéro de la demande

EP  84 45 0004

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 206 465 (BERINGER-HYDRAULIK GmbH) * Page 3, ligne 28 - page 4, ligne 20 * | 1 | F 16 K  17/30 |

-----

DOMAINES TECHNIQUES RECHERCHES (Int. Cl. ³)

F 16 K

Le présent rapport de recherche a été établi pour toutes les revendications

| Lieu de la recherche LA HAYE | Date d'achèvement de la recherche 08-05-1984 | Examinateur VERELST P.E.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82